# EUROPEAN PATENT APPLICATION

(11) **EP 2 371 684 A2**
(43) Date of publication of application: **05.10.2011**
(21) Application number: 11380028.8
(22) Date of filing: 04.04.2011
(51) Int. Cl.: B62D 65/18

(54) **Auxiliary carriage for production lines**

(30) Priority: 05.04.2010 ES 201030499
(71) Applicant: Seat, S.A., 08760 Martorell - Barcelona (ES)
(72) Inventor: Maside Maside, Manuel, 08760 Martorell - Barcelona (ES); Martínez García, Pedro, 08760 Martorell - Barcelona (ES); García Blanco, Gustavo, 08760 Martorell - Barcelona (ES); Rubio Moreno, Cristian Denian, 08760 Martorell - Barcelona (ES); Valle Dominguez, Ricardo, 08760 Martorell - Barcelona (ES); Rofin Gimeno, Anabel, 08760 Martorell - Barcelona (ES)
(74) Representative: Carvajal y Urquijo, Isabel

(57) **Abstract**

Auxiliary carriage for production lines provided with mobile supports (1) which transport a complex product (2) in an assembly process, whose carriage comprises a support structure (5), some wheels (6) for its lineal displacement from an initial station (3) to a successive assembly station (4). The carriage (20) comprises an energy recuperator (9), which makes the carriage return in an autonomous way, fixed to the support structure (5) from which there extends a cable (10) connected at one of its ends and wound in the interior of said recuperator (9) and connected at its other end to a pulley (11), with respect to which said cable (10) is wound, a main wheel (12) for the forward movement of the carriage integral to the pulley (11) and a retainer (13), fixed to the support structure (5), configured to temporarily connect the carriage (20) to the mobile supports (1).

## Description

### Field of the invention

The present invention refers to the field of auxiliary elements used in assembling or manufacturing a complex product in a manufacturing or production line, and more specifically it refers to an auxiliary carriage on which either different components of the complex product or elements used for the connection of said components will be deposited, which is jointly displaced with the complex product between two consecutive assembly stations.

### Background of the invention

Nowadays, in assembly lines for the manufacturing of the majority of everyday objects auxiliary carriages which help during the product assembly process are used, said carriages holding either different product components, or any other element that may be involved in the product assembly, such as for example joint or connection pieces for the components or even the assembling tools themselves.

In many manufacturing processes mobile supports are used, on which the product to be mounted is placed and which are displaced from one assembly station to the immediately following one, with a series of assembly operations being performed at each assembly station, which successively create the product.

Habitually, said auxiliary carriages consist of a simple structure consisting of tubes, bars o similar elements, connected to one another, having lower wheels for the movement of the carriage and trays and brackets of diverse nature for holding the product components, joint elements, tools, etc. In most cases, the carriages do not have their own driving means, so it is the operator the one in charge of displacing the carriage along the working area of his/her assembly station, this task being rather tedious sometimes, since as the production lines are continuous ones, the carriage displacement must be made at each assembly for each one of the products that are mounted by the operator. In addition to the tiredness and fatigue that the continuous carriage pushing produces to the operator, the assembly time is noticeably increased, which has a direct impact on the production performance increasing labour costs.

At the opposite end, there exist auxiliary carriages that accompany the movement of both the mobile supports and the operator, which have their own driving elements, whose movement is based on very complex robotic systems based on robots that can follow a predetermined path, having artificial vision means and other series of alternative means configured to start and stop the carriage.

Patent US-A-20100028113 describes a mounting device which is designed to be coupled to the supports (12) which transport the entire product through the synchronizing bar (26) which temporarily links the movement of the device and that of the supports (12) of the assembly line.

The device comprises a self-propelled carriage (14) which has a motor (44) which makes said device be able to move independently from the movement of the support (12) which has a speed that is established by the assembly line. The carriage (14) has a lifting platform (16) mounted on a table (20) which can displace with respect to the carriage chassis (14), in a direction parallel to the displacement direction of the support (12), by means of guides and rails (22). One of the ends of the table (20) is connected to restoring means (18) consisting of a spring balancer. The restoring means are used, along with a "V-shaped" guide member (30) fixed to the chassis (14), to make the coupling between the synchronizing bar (12) and the support (12) transporting the vehicle softer and safer, when the lifting platform (16) is elevated, and which prevents unexpected stops and problems in case that the device and the support (12) speeds are different.

Thus, for the device described in patent US-A-20100028113 a motor that can operate it and produce its movement is an essential element, since the support (12) cannot move it by itself, due to the size and weight of the pieces transported by the mounting device. Therefore, the back-and-forth movement of the carriage is produced thanks to the motor it has and it is not achieved by the restoring means.

Thus, it has been detected a need for providing an auxiliary carriage whose displacement between two assembly stations is linked to the displacement of the mobile supports on which the complex product is placed for its mounting and whose displacement means are simple and which does not require the use of an independent motor for the displacement of the auxiliary carriage.

This objective is achieved by means of the invention as defined in claim 1, in the dependent claims preferred embodiments of the invention are defined.

### Description of the invention

The invention refers to an auxiliary carriage for production lines provided with mobile supports that transport a complex product in the mounting process, where said mobile supports move from an assembly station to a successive assembly station over a predetermined distance, allowing for the formation of said complex product. The carriage comprises a support structure, some wheels at the lower part of the support structure for its lineal displacement from an assembly station to a successive assembly station, a plurality of containers and brackets coupled to the support structure and a retainer, fixed to the support structure, configured to temporarily connect the auxiliary carriage to the mobile supports that transport the complex product. The auxiliary carriage object of the present invention has a special feature as it comprises an energy recuperator fixed to the support structure, a main wheel for the forward movement of the carriage and some elements for connecting the energy recuperator with the main wheel for the forward movement.

With the described configuration the carriage adopts a forward movement position, in which the retainer couples the carriage to the mobile elements, producing the joint displacement of the carriage and the mobile elements from the assembly station to the successive assembly station and a return position at which the retainer uncouples the carriage from the mobile elements, producing the independent displacement of the carriage due to the energy recuperator from the successive assembly station to the assembly station.

In this way, when the retainer element is working and the carriage is displaced along with the mobile elements, the operator can take the parts needed for forming the product, such as connection elements and tools necessary for the assembling, from the different trays and brackets of the carriage as the carriage accompanies the path followed by the operator at all times. Once the operator has finished the complex product assembling operations s/he uncouples the retainer, releasing the carriage from the mobile elements, which, thanks to the action of the recuperator, returns along the same path it followed against the movement of the mobile elements, returning to its initial position to be coupled again by the operator when the following mobile element arrives and thus perform the assembly operations for the following product. That is, when the carriage returns to the initial position, this is made thanks to the recovery force of the recovery element, without an independent motor being required for it to be driven.

The recuperator may comprise a casing in whose interior it will have a helical spring fixed at one end to the aforementioned casing and the elements for connecting the recuperator to the main wheel may consist of a cable and a pulley fixed to the main wheel. The cable will be connected at one of its ends to the free end of the helical spring and may be wound around the spring itself in the interior of the recuperator and its other end will be connected to the pulley around which it will be possible to wind said cable during the forward movement of the carriage. In this way, in the forward movement of the carriage, when it is connected to the mobile element, the spring will be stretched by the cable that is wound around the pulley when the carriage due to the turn of the main wheel to which the pulley is fixed when the carriage moves forward along with the mobile element, until the moment in which the carriage is uncoupled from the mobile element, in which case the spring will recover its initial form and will tend to pull from the cable unwinding it from the pulley, which, as it is fixed to the main wheel, makes said main wheel turn and thus makes the carriage autonomously move, using the recovery force of the recuperator for driving the carriage.

As regards the retainer, it may be placed on the upper part of the support structure and operated through a pneumatic device which will be operated through a pushbutton placed in a convenient zone of the support structure and fixed thereto. By the simple operation of the pushbutton, by the operator, the retainer will be unfolded or retracted to couple or uncouple the carriage to the mobile element.

Additionally, in the support structure there will be a compressed air inlet connected to the pneumatic device to achieve the displacement of the retainer, said air inlet also having outlets for auxiliary connections for pneumatic tools.

The support structure may have a shoe placed parallel to the displacement direction, which will be configured to be inserted into a guide made in the floor which will be connected to the assembly stations. Said shoe and guide will serve to increase the stability of the carriage during its displacement and especially to accurately define the trajectory of the track followed by the carriage in its back-and-forth movements.

### Brief description of the drawings

There follows a very brief description of a series of drawings that will help understand the invention better relating to an embodiment of said invention which is presented as a non-limiting example thereof.
Figure 1 shows a scheme of a production line.
Figure 2 shows a first perspective view of the auxiliary carriage for production lines object of the present invention.
Figure 3 shows a second perspective view of the auxiliary carriage for production lines object of the present invention.
Figure 4 shows a perspective view of the lower portion of the auxiliary carriage for production lines object of the present invention.

In the aforementioned figures a series of references corresponding to the elements indicated below are identified, which are not intended to limit the invention in any way:
1.- production line mobile supports
2.- complex product mounted on the production line
3.- assembly station
4.- successive assembly station
5.- carriage support structure
6.- carriage wheels
7.- carriage containers
8.- brackets of the carriage
9.- energy recuperator
10.- cable connected to recuperator
11.- pulley
12.- main wheel
13.- retainer
15.- pneumatic device for operating the retainer
16.- pushbutton of the pneumatic device
17.- compressed air inlet
18.- carriage shoe
19.- guide made in the floor
20.- auxiliary carriage
21.- tubes forming the support structure

### Detailed Description of an embodiment

The auxiliary carriage object of the present invention will be used in a manufacturing or production line in which a complex product (2) will be configured through successive mounting operations, which will be performed with the complex product placed on a mobile element (1) that will pass from an assembly station (3) to a successive assembly station (4). In the present embodiment, the complex product will be a vehicle, which is placed on a carrier hook from which the vehicle hangs or a similar element that transport the vehicle on the floor, which will act as a mobile element. Logically the production line will have a plurality of carrier hooks or similar mobile elements on each one of which a vehicle will be placed, the assembly stations being fixed and the vehicle passing from an assembly station to the successive assembly station and then to the following one, one or several components of the vehicle being mounted at each station. The mounting operations will be performed between the two assembly stations, taking advantage of the path followed by the vehicle from an assembly station to the following one, thus the carriage will have to be displaced along with the carrier hook or the mobile element (1).

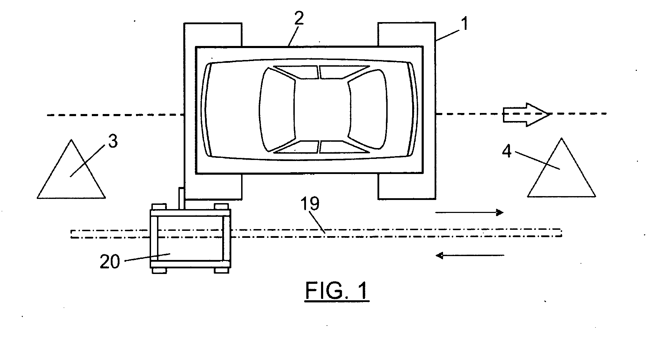

Figure 1 shows a schematic representation of an assembly station (3) and the successive station (4), the carrier hook or mobile element (1), the vehicle (2) and the auxiliary carriage (20), which is placed in the vicinity of the carrier hook or the mobile element (1).

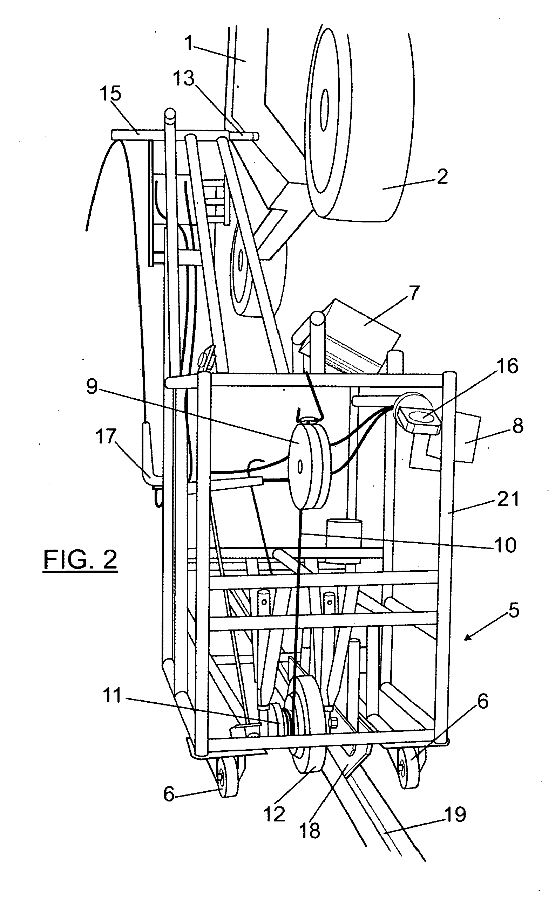

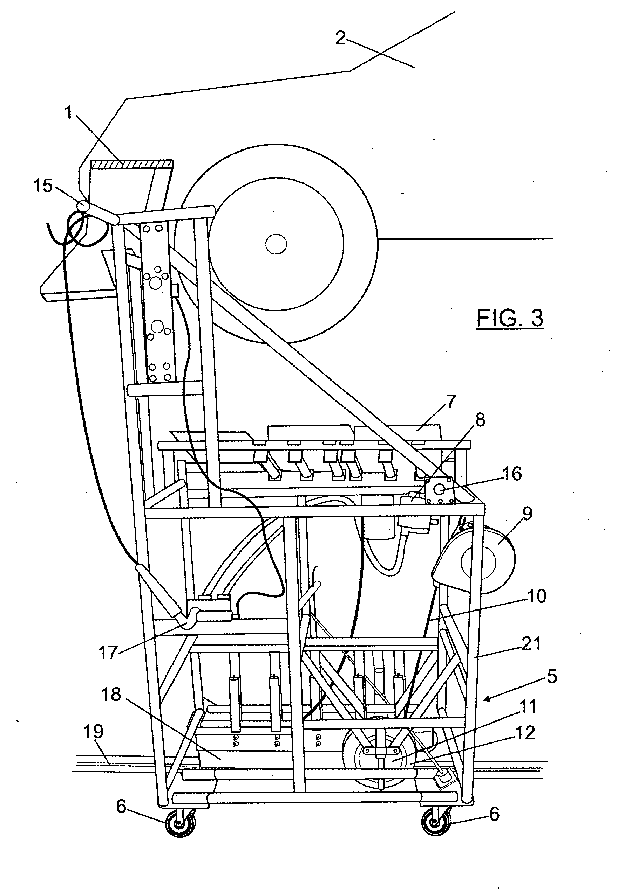

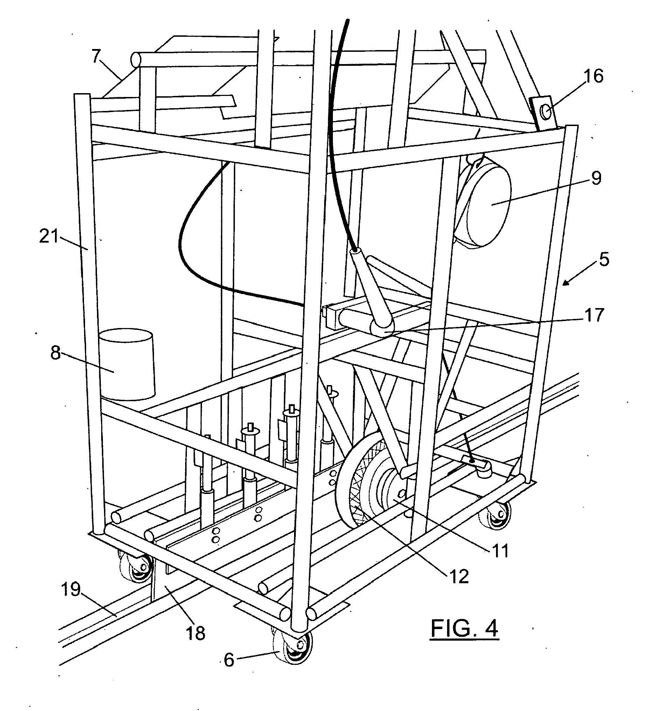

As shown in Figures 2 to 4, the carriage has a support structure (5) which in the present embodiment is constituted by a plurality of cylindrical tubes (21) arranged in such a way that they constitute a spatial structure which in this case has the shape of approximately a parallelepiped.

At its lower part the structure (5) has a total of four wheels (6) that serve to achieve the displacement of the carriage over the space comprised between the two assembly stations (3) and (4). On said wheels it will be possible to have cleaning elements (not shown) attached thereto, such as brushes and the like so that when the carriage is displaced said brushes eliminate the dirt that may be adhered to the wheels, the rolling being optimal at all times.

Given that the main purpose of the carriage is helping the operator during the assembly of the vehicle (2), on the carriage there will be a plurality of containers (7) whose number and arrangement with respect to the carriage will be variable and will be adapted to the requests of the mounting operations that have to be performed in each case, there will also be a series of brackets (8) also in a variable number and arrangement, to hold parts and/or tools.

The carriage, connected to its support structure (5) will have an energy recuperator (9) which carries a cable (10) wound in its interior, with one of its ends being connected to the aforementioned recuperator (9) and the other end being in turn connected to a pulley (11) which is coupled to a main wheel (12). In this embodiment, a helical spring may be used as a recuperator, which is surrounded by a casing for its protection. Alternatively, instead of a cable (10) wound in a pulley (11), a chain and a toothed plate (not shown in the figure) or any other mechanism that can fulfil the same function may be used.

Another important element of the carriage is a retainer (13) fixed to the structure (5), which in the present embodiment, due to the height at which the vehicle is placed for its assembly, is placed on the upper part of said structure (5) as it can be seen in the figures, the main function of said retainer (13) being to temporarily relate the displacement of the carriage (20) to the displacement of the carrier hook or the mobile element (1), that is to make the carriage displace along with the carrier hook. The aforementioned retainer (13) will be operated by a pneumatic device (15) which will basically consist of a pneumatic cylinder actuated by compressed air for which the carriage has a compressed air inlet (17) which besides supplying air for the operation of the retainer, will serve as a source of compressed air for other uses such as for example to provide air wrenches or similar pneumatic tools with compressed air. The operation of the retainer (13) will be performed directly by the operator thanks to the existence of a pushbutton (16) fixed into a convenient place for the operator.

Besides, as the path of the carriage (20) must be parallel to the movement direction of the carrier hook or mobile element (1), to force said path to follow a completely straight line and prevent any deviations of the carriage, which may cause it to overturn there is a shoe (18) in the lower part parallel to said path and perpendicular to the tubes (21) to which the wheels (6) are joined, said shoe is projected beyond the lower limits of the carriage, until it is partially inserted into a groove-like guide (19) made in the floor of the area where the assembly stations are placed. The shoe (18) may have a guide cleaning brush so that when the displacement of the carriage is produced, said brush may extract the dirt from the aforementioned guide and the slide of the shoe (18) along the guide (19) is as smooth and seamless as possible.

Alternatively, instead of the aforementioned shoe (18) and guide (19), there may be on the floor in the path between the assembly stations, a plate (not shown in the figures) fixed to the floor by mechanical means with the possibility of changing its position and even shortening its length if necessary, said plate having a width such that on its longitudinal edges the wheels (6) of the carriage are mounted, with a staggering configuration to facilitate the guiding of the carriage according to the aforementioned straight path. However, the use of guides (19), shoes (18) or plates is not compulsory, it being possible to avoid the use of said elements, provided that the carriage (10) path is always parallel to the movement path of the carrier hook or mobile element (1) to prevent the carriage from overturning.

With the configuration described above the operation of the auxiliary carriage object of the present invention will be as follows.

When the carrier hook or mobile element (1) arrives at the assembly station (3) coming from the previous station, the carriage (20) is placed in a position which we shall call resting position at the beginning of the track between the assembly station (3) and the successive station (4), understanding as successive the following station in the production line taking the movement direction of the carrier hook or mobile element (1). Once the carrier hook or mobile element (1) is in front of the carriage (20) the operator pushes the pushbutton (16) and the retainer automatically couples the carriage to the carrier hook, at that moment, the carrier hook continues its path towards the successive station (4) and the carriage in turn moves forward with the carrier hook, its track being guided by the shoe (18) and the guide (19), as the carriage is displaced, the cable (10) is wound around the pulley (11) associated with the main wheel (12), whose mission is to produce the displacement of the carriage in its return path, the wheels (6) operating like support wheels to help with the stable displacement of the carriage. While the cable (10) is wound around the pulley (11) the other end of the cable (10) pulls from the helical spring end (not shown), producing its compression. During the joint movement of the carriage and the carrier hook, the operator performs the working operations and processes of which s/he is in charge to assemble the vehicle.

Once the carrier hook or mobile element (1) along with the carriage (20) arrive at the successive assembly station (4), the operator pushes the pushbutton (16) again and uncouples the carriage from the carrier hook, the carrier hook continuing its path towards the following assembly station, while the carriage (20) returns, following the opposite direction, to the station (3), following the same path that it followed to arrive at the station (4), thanks to the shoe and guide. In this way the displacement of the carriage is produced in an autonomous way without the need for providing additional energy and thanks to the recovery force of the spring, which will make the end of said spring pull from the end of the cable (20), unwinding it from the pulley (11), which makes the main wheel (12) rotate, thus propelling the carriage to the assembly station (3) and thus returning it to its resting position to wait for the following carrier hook.

## Claims

1. Auxiliary carriage for production lines provided with mobile supports (1) which transport a complex product (2) in an assembly process, where said mobile supports (1) move from an assembly station (3) to a successive assembly station (4) over a predetermined distance, allowing the formation of said complex product (2), whose carriage comprises a support structure (5), some wheels (6) at the lower part of the support structure (5) for its lineal displacement from the initial station (3) to the successive assembly station (4), a plurality of containers (7) and brackets (8) coupled to the support structure (5) and a retainer (13), fixed to the support structure (5), configured to temporarily connect the auxiliary carriage to the mobile supports (1) for the transportation of the complex product (2), **characterized in that** it comprises
an energy recuperator (9) fixed to the support structure (5),
a main wheel (12) for the forward movement of the carriage and
some elements (10-11) for the connection of the energy recuperator (9) with the main wheel (12) for the forward movement;
wherein the carriage (20) adopts a forward movement position, in which the retainer (13) couples the carriage (20) to the mobile elements (1) producing the joint displacement of the carriage (20) and the mobile elements (1) from the assembly station (3) to the successive assembly station (4) and a return position at which the retainer (13) uncouples the carriage (20) from the mobile elements (1), producing the independent displacement of the carriage (20) due to the energy recuperator (9) from the successive assembly station (4) to the assembly station (3).

2. Auxiliary carriage according to claim 1, **characterized in that** the retainer (13) is placed on the upper part of the support structure (5) and operated through a pneumatic device (14) that is operated through a pushbutton (16) placed in a convenient zone of the support structure (5) and fixed thereto.

3. Auxiliary carriage according to any of the preceding claims, **characterized in that** in the support structure (5) there is a compressed air inlet (17) connected to the pneumatic device and having outlets for auxiliary connections for pneumatic tools.

4. Auxiliary carriage according to any of the preceding claims, **characterized in that** the support structure (5) has a shoe (18) placed parallel to the displacement direction configuration to be inserted into a guide (19) made in the floor, which connects the assembly stations (3) and (4).
